# EUROPÄISCHE PATENTSCHRIFT

(11) **EP 2 081 003 B1**
(45) Veröffentlichungstag und Bekanntmachung des Hinweises auf die Patenterteilung: **14.07.2010**
(21) Anmeldenummer: 08001014.3
(22) Anmeldetag: 21.01.2008
(51) Int. Cl.: G01J 1/04, G01J 5/00, G01S 17/10, G08B 17/12

(54) **Detektor für die Entdeckung von Flammen oder Funken in Werkzeugmaschinen**
Detector for the finding of flames or sparks in machine tools
Détecteur pour la détermination de la présence de flammes ou étincelles dans des machines-outils

(43) Veröffentlichungstag der Anmeldung: 22.07.2009
(73) Patentinhaber: Sidacon Systemtechnik GmbH, 72459 Albstadt (DE)
(72) Erfinder: Schuy, Thomas, 72458 Albstadt (DE)
(74) Vertreter: Göhring, Robert

(56) Entgegenhaltungen:
- EP-A- 1 658 937
- JP-A- 10 246 782
- JP-A- 2003 091 786
- JP-A- 2006 011 845

## Beschreibung

Die Erfindung betrifft einen Detektor für die Entdeckung von Flammen oder Funken, insbesondere zum Einsatz in Werkzeugmaschinen, mit mindestens einer optischen Empfängereinrichtung für die von Flammen ausgesandte elektromagnetische Strahlung, welche in einem Detektorgehäuse mit mindestens einem Fenster angeordnet ist.

Ein solcher Detekor ist z.B. aus JP 2003 091 786 A bekannt.

Detektoren der angegebenen Art werden zum schnellen Entdecken von Flammen, Funken oder ähnlichem in Werkzeugmaschinen genutzt. Die Detektoren sind dabei innerhalb der Arbeitskabinen von Werkzeugmaschinen angeordnet, wo es durch Öl oder andere in der Werkzeugmaschine auftretende Verunreinigungen zu Verschmutzungen des Fensters durch Ablagerung dieser Verunreinigungen kommt. Dies hat zur Folge, dass der Detektor nur ungenaue Messdaten über die von Flammen ausgesandte elektromagnetische Strahlung erhält, was dazu führt, dass ein durch Feuererscheinungen hervorgerufener kritischer Zustand nicht zuverlässig erkannt wird.

Aus der DE 42 40 395 C2 ist ein gattungsgemäßer Detektor bekannt, bei welchem das Fenster auf Verunreinigungen überwacht wird. Dazu ist auf der Außenseite des Detektorgehäuses am Rand des Fensters ein elektromagnetische Strahlung abstrahlendes Element angeordnet. Ein Teil der von dem Element abgestrahlten Strahlung durchdringt das Fenster des Detektors und eine eventuell darüber liegende Schmutzschicht und wird von einem Sensorelement erfasst. Je nach Art oder Umfang der Schmutzschicht weicht der zu dem Sensorelement gelangende Anteil der Strahlung von dem Anteil ab, der ohne Verschmutzung des Fensters dorthin gelangen würde. Aus dieser Abweichung, die an dem Ausgangssignal des Sensors ablesbar ist, kann auf den Grad der Verschmutzung des Fensters geschlossen werden.

Eine kontinuierliche Prüfung des Fensters auf Verschmutzung ist auch in der DE 195 31 917 C1 offenbart. Hier beleuchtet ein im Inneren des Detektorgehäuses angeordneter Sender das Fenster von innen. Dabei wird von der Fensteroberfläche ein Teil der Strahlung reflektiert. Dieses reflektierte Signal ist auch abhängig von den Reflexionseigenschaften der äußeren Fensteroberfläche. Hierdurch kann deren Zustand registriert werden.

Die Verhinderung von Ablagerungen auf dem Fenster ist aus der DE 10 2004 033 807 A1 bekannt. Hier wird ein Spülgas, welches zunächst entlang der nach außen gewandten Oberfläche des Fensters verläuft, erzeugt. Dabei werden die auf der Oberfläche des Fensters abgelagerten Partikel aufgenommen und von dem Fenster weggeführt.

Bei allen genannten Möglichkeiten wird das Fenster frei geblasen bzw. aktiv auf Verschmutzung überwacht. Hindernisse, die sich im Sichtfeld des Detektors befinden und den Detektor abschatten, werden aber bei der Überwachung der Funktionsweise des Detektors nicht berücksichtigt.

Der Erfindung liegt somit die Aufgabe zu Grunde, einen Detektor für von Flammen ausgestrahlte elektromagnetische Strahlung anzugeben, welcher trotz Hindernissen im Sichtfeld des Detektors zuverlässig arbeitet.

Erfindungsgemäß wird die Aufgabe durch einen Detekor mit den Merkmalen des Anspruchs 1 gelöst.

Die Erfindung hat den Vorteil, dass eventuell vorhandene störende Objekte, die den Detektor in seiner Sicht beeinträchtigen, sicher erkannt werden und deren Abstand zum Fenster zuverlässig bestimmt wird. Bei Werkzeugmaschinen beträgt der Überwachungsbereich des Detektors ca. 0,50 bis 5 m. Besonders kritisch ist der Bereich von ungefähr 50 cm Abstand vom Fenster, da sich hier befindliche Objekte den Sichtbereich des Fensters direkt verdecken. Weiter entfernte Objekte wirken sich weniger oder gar nicht störend aus, da die von Flammen ausgesandte elektromagnetische Strahlung an den Oberflächen der Innenseite der Werkzeugmaschine sehr gut reflektiert wird und somit den Detektor auf Umwegen erreicht.

Um eine Entfernung, gemessen vom Detektor bis zum störenden Objekt zuverlässig zu bestimmen, besteht der Abstandssensor aus einem impulsförmige Signale aussendenden Sender und einem Empfänger, welcher die von einem Objekt im Sichtfeld des Detektors reflektierten impulsförmigen Signale empfängt, wobei der Sender und der Empfänger mit einer Auswerteeinheit verbunden sind, welche zur Entfernungsbestimmung des Objektes eine Laufzeitmessung durchführt.

In einer Weiterbildung der Erfindung ist der Sender eine Diode, welche elektromagnetische Strahlung in einem definierten Frequenzbereich emittiert, der zu dem von der elektromagnetischen Strahlung der Flammen ausgesandten Frequenzbereich unterschiedlich ist. Somit wird sichergestellt, dass sich die Frequenzspektren der Signale zur Feuerüberwachung und zur Abstandsüberwachung voneinander unterscheiden, wodurch eine zuverlässige Funktionsweise des Detektors gewährleistet ist.

In einer besonders einfachen Ausgestaltung ist die Diode je nach gefordertem Anwendungsfall als Halbleiterdiode oder aber als Laserdiode mit höherer Leistung ausgebildet.

Vorteilhafterweise sind der Sender und der Empfänger in einem für den von dem Sender emittierten definierten Frequenzbereich der elektromagnetischen Strahlung undurchlässigen Sensorgehäuse angeordnet. Dabei sind Sender und Empfänger durch ihren mechanischen Aufbau räumlich so voneinander getrennt, dass eine direkte Einkopplung der vom Sender ausgesandten elektromagnetischen Strahlung auf den Empfänger nicht möglich ist.

In einer Weiterbildung der Erfindung ist das Sensorgehäuse innerhalb des Detektorgehäuses angeordnet. Das Detektorgehäuse schützt somit alle für die Funktion des Detektors notwendigen Bauteile.

Bei einer besonders vorteilhaften Ausgestaltung der Erfindung liegt der von dem Sender ausgestrahlte definierte Frequenzbereich der elektromagnetischen Strahlung im Infrarotbereich.

Baulich lässt sich der Abstandssensor besonders einfach mechanisch als auch elektrisch herstellen, wenn der Sender, der Empfänger und die Auswerteeinheit auf einer einzigen Leiterplatte angeordnet sind.

In einer Ausgestaltung der Erfindung sind Sender und Empfänger mit dem Sensorgehäuse auf der Leiterplatte angeordnet. Dies hat den Vorteil, dass diese Sender-/ Empfängereinheit mit dem Sensorgehäuse als ein Bauteil vorgefertigt werden kann, welche dann als Baueinheit auf der Leiterplatte verankert wird.

Soll nicht nur der Abstand des Objektes zum Detektor, sondern die genaue Position des Objektes bestimmt werden, ist es von Vorteil, wenn mehrere neben- und/oder untereinander angeordnete Sender vorhanden sind, welche jeweils einen definierten Abstrahlwinkel aufweisen.

Vorteilhafterweise weist der Detektor mehrere Fenster auf, wobei jedem Fenster ein Abstandssensor zugeordnet ist. So kann der Abstand bzw. die Position des störenden Objektes zu jedem Fenster genau bestimmt werden.

Die Auswerteeinheit gibt eine Störmeldung aus, wenn der Abstand zu dem in Sichtfeld des Detektors befindlichen Objektes einen vorgegebenen Wert unterschreitet. Dies kann auf vielfältige Weise durch optische und /oder akustische Signale erfolgen.

Die Erfindung lässt zahlreiche Ausführungsformen zu. Eine davon soll anhand der in der Zeichnung dargestellten Figuren näher erläutert werden.

Es zeigt:
- Figur 1: Systemschema einer Werkzeugmaschine
- Figur 2: erfindungsgemäßer Detektor für von Flammen ausge- strahlte elektromagnetische Strahlung
- Figur 3: Abstandssensor gemäß Figur 2
- Figur 4: Detektor mit zwei Fenstern

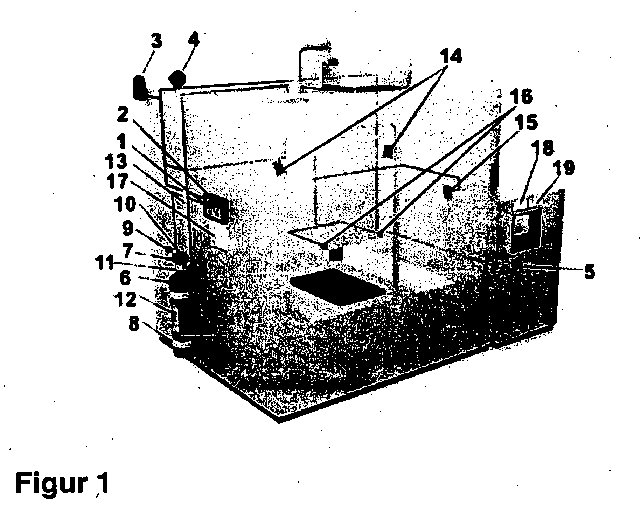

In Figur 1 ist ein Systemschema für eine Werkzeugmaschine dargestellt, bei welcher es während des normalen Arbeitsprozesses zu Funkenflug bzw. Flammenbildung kommen kann. Die Werkzeugmaschine weist daher eine Vielzahl von äußeren Sicherheitsvorrichtungen auf, die auf mögliche Gefahren hinweisen bzw. bei Gefahr eine Einflussnahme des Bedienpersonals auf die Werkzeugmaschine ermöglichen.

An der Außenwand der Werkzeugmaschine befindet sich ein Alarm- und Steuerset 1 sowie eine Löschanlagensteuerung 2 mit abschließbarer Klarsichttür, mit welchem im Brandfall Maßnahmen zur Bekämpfung des Feuers eingeleitet und überwacht werden können. Mit Hilfe einer Warnleuchte 3 und einer Sirene bzw. einem Piezohorn 4 wird die Umgebung mit optischen bzw. akustischen Signalen gewarnt. Mit einem Druckknopfmelder 5, der als Handauslöser ausgeführt ist, werden die Warnsignale initialisiert.

Außen an der Werkzeugmaschine ist mittels einer Halterung 8 eine CO₂ - Flasche 6 angebracht, welche je nach Notwendigkeit einen Inhalt von 2 bis 20 kg aufweist. Die CO₂ - Flasche 6 ist mit einem Schnellauslöseventil 7 und einem Druckgaserzeuger 9 ausgestattet, um schnell vor Ort aufkeimende Brände unter Kontrolle bringen zu können. Im unbenutzten Zustand wird das Ventil 7 mit einer Ventilabdeckklappe 10 abgedeckt. Beim Transport der CO₂ Flasche 6 schützen zusätzlich eine Ventilschutzklappe 11 bzw. ein Sicherungsstift. Ein Behälterschild 12 weist auf den Inhalt und Gebrauch der CO₂ - Flasche 6 hin.

Die CO₂ - Flasche 6 ist mit einer Löschleitung 13 verbunden, welche mit einem CO₂ -Pralltopf 14 bzw. einer 2-Becherdüse verbunden ist.

Darüber hinaus verfügt die Werkzeugmaschine über weitere Melde- und Warneinrichtungen, wie einen optischen Flammenmelder 15 und einen Thermomaximalmelder 16. Hinweisschilder, wie ein Anlagenschild 17 und ein CO₂ -Warnschild 18 weisen auf die Gefährlichkeit der Anlage hin. Darüber hinaus ist auch ein Hinweisschild 19 für "UV- oder IR-Strahlung" vorhanden.

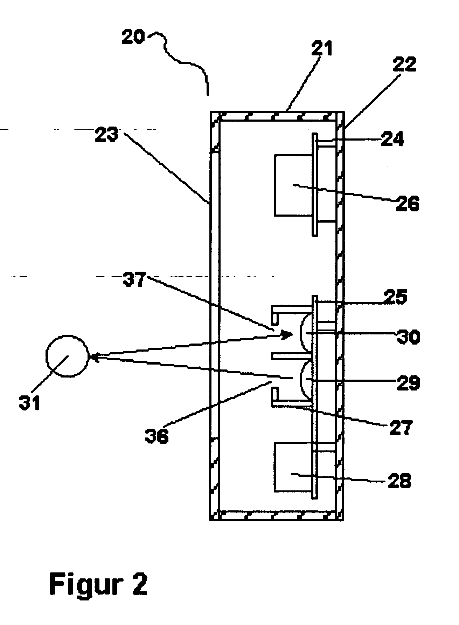

Ein Detektor 20 für von Flammen ausgestrahlte elektromagnetische Strahlung, wie er in der beschriebenen Werkzeugmaschine zum Einsatz kommt, ist in Figur 2 dargestellt. Der Detektor 20 wird innerhalb einer Arbeitskäbine der Werkzeugmaschine betrieben und hat im vorgegebenen Beispiel einen Arbeitsbereich von 0,5 m bis 5 m.

Der Detektor 20 besteht aus einem Detektorgehäuse 21 mit einem Gehäuseboden 22. Das Detektorgehäuse 21 weist ein optisches Fenster 23 auf. Auf dem Gehäuseboden 22 sind zwei Leiterplatten 24, 25 angeordnet. Die erste Leiterplatte 24 trägt eine Empfängereinrichtung 26, die die von Flammen bzw. Funken abgegebene elektromagnetische Strahlung detektiert und vorteilhafterweise elektrisch mit dem optischen Flammenmelder 15 verbunden ist.

Auf der zweiten Leiterplatte 25 sind ein Abstandssensor 27 und eine elektrisch mit dem Abstandssensor 27 verbundene Auswerteelektronik 28 angeordnet. Die Empfängereinrichtung 26 und der Abstandsensor 27 liegen dabei dem Fenster 23 unmittelbar gegenüber und werden von diesem vollständig überdeckt, so dass die von außerhalb des Detektors 20 einwirkende elektromagnetische Strahlung, die auf das Fenster 23 fällt, ungehindert auf die Empfängereinrichtung 26 bzw. den Abstandssensor 27 auftreffen kann.

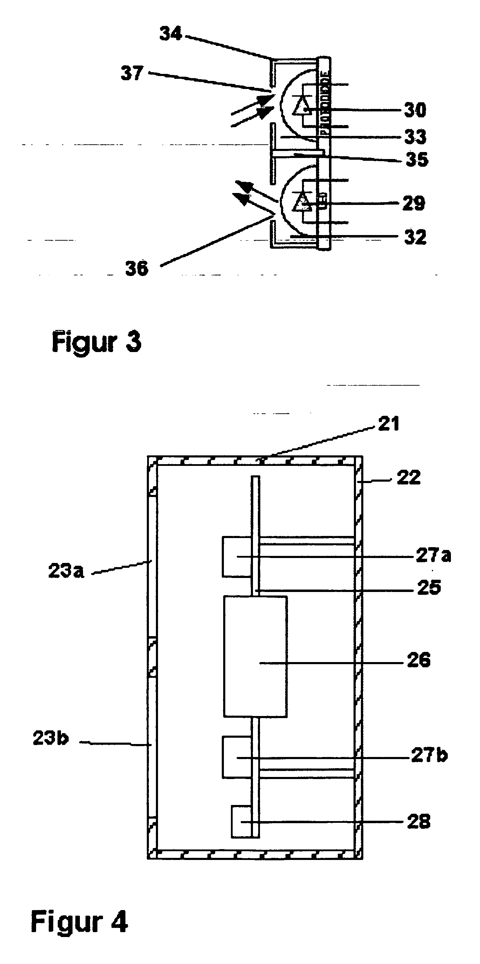

Der Aufbau des Abstandssensors 27 ist in Figur 3 näher erläutert. Er besteht aus einer Strahlung im nahen Infrarotbereich aussendenden Lichtemitterdiode 29 und einer als Empfänger dienenden Photodiode 30, die die von einem Hindernis 31 reflektierte, im nahen Infrarotbereich liegende Strahlung detektiert. Sowohl die Lichtemitterdiode 29 als auch die Photodiode 30 sind in jeweils einer Kammer 32, 33 angeordnet. Diese Kammern 32, 33 werden von dem Sensorgehäuse 34 des Abstandssensors 27 gebildet, welches eine Trennwand 35 zwischen Lichtemitterdiode 29 und Photodiode 30 aufweist. Das gesamte Sensorgehäuse 34 einschließlich der Trennwand 35 ist undurchlässig für die Infrarotstrahlung, welche von der Lichtemitterdiode 29 ausgestrahlt wird. Somit wird eine direkte Einkopplung der Infrarotstrahlung auf die als Empfänger arbeitende Photodiode 30 zuverlässig verhindert. Darüber hinaus weist jede Kammer 32, 33 eine Öffnung 36, 37 auf, durch welche die emittierte Infrarotstrahlung austreten bzw. die von dem Hindernis 31 reflektierte Infrarotstrahlung eintreten kann. (Figur 2)

Zur Überprüfung, ob sich außerhalb des den Abstandssensor 27 schützenden Detektorgehäuses 21 eine Objekt 31 im Sichtfeld des Detektors 20 befindet, regt die Auswerteelektronik 28 die Lichtemitterdiode 29 an, in vorgegebenen zeitlichen Abständen Impulse auszustrahlen. Diese werden durch das Fenster 23 des Detektors 20 nach außen abgestrahlt. Befindet sich nun ein Objekt 31 im Sichtbereich des Detektors 20, so reflektiert dieses die von der Lichtemitterdiode 29 ausgesandten Impulse. Die reflektierten Impulse werden von der Photodiode 30 im Inneren des Detektorgehäuses 21 empfangen, in elektrische Signale umgewandelt, die wiederum an die Auswerteelektronik 28 weitergeleitet werden. Aufgrund der Laufzeit der ausgesandten Infrarotstrahlung von der Aussendung des Impulses bis zum Empfang der reflektierten Impulse lässt sich die Entfernung zum störenden Objekt 31 berechnen. Beträgt diese Entfernung weniger als eine Mindestentfernung, z. B. 50 cm, wird von der Auswerteelektronik 28 ein optisches oder akustisches Warnsignal ausgegeben. Damit wird angezeigt, dass der Detektor 20 von dem Objekt 31 abgedeckt wird und nicht mehr störungsfrei arbeitet.

Eine Ausführung des Detektors mit zwei Fenstern 23 a und 23 b ist aus Figur 4 zu entnehmen. Die Empfängereinrichtung 26 ist mittig im Detektorgehäuse 21, in welchem die beiden Fenster 23a und 23b eingearbeitet sind, angeordnet. So fällt die durch Flammen ausgesandte elektromagnetische Strahlung sowohl durch Fenster 23a als auch durch Fenster 23b auf die Empfängereinrichtung 26 und wird von dieser sicher detektiert. Um festzustellen, ob ein sich außerhalb des Detektorgehäuse 21 befindliches Objekt den Sichtbereich des Detektor 20 abschattet, ist für jedes Fenster 23a, 23b jeweils ein Abstandssensor vorgesehen. So wird das Sichtfeld des Fensters 23a von dem Abstandssensor 27a überwacht, während das Sichtfeld des Fensters 23b durch einen zweiten Abstandssensor 27b kontrolliert wird. Beide Abstandssensoren 27a, 27b sind zur Steuerung und Auswertung mit der Auswerteelektronik 28 verbunden.

Soll nicht nur der Abstand des störenden Objektes, sondern seine genaue Position im Sichtbereich des Detektors 20 bestimmt werden, wird ein nicht weiter dargestelltes Sende- Array verwendet. Dieses Sende - Array besteht aus mehreren nebeneinander und untereinander angeordneten Lichtemitterdioden, welche einen definierten Abstrahlwinkel von beispielsweise 5 Grad aufweisen. Die einzelnen Lichtemitterdioden des Sende-Arrays werden nacheinander von der Auswerteelektronik angesteuert und zur Abgabe von Impulsen angeregt, welche ebenfalls im nahen Infrarotbereich liegen. Diese Vielzahl von Impulsen werden von dem störenden Objekt reflektiert und die reflektierten Impulse von einer Empfängerdiode empfangen und als elektrische Signale an die Auswerteelektronik weitergeleitet. Die Auswerteelektronik bestimmt aus diesen Signalen die genaue Position sowie die Größe des Objektes.

### Bezugszeichenliste

- 1: Alarm- und Steuerset
- 2: Löschanlagensteuerung
- 3: Warnleuchte
- 4: Sirene bzw. Piezohorn
- 5: Druckknopfmelder
- 6: CO₂-Flasche
- 7: Schnellauslöseventil
- 8: Halterung CO₂-Behälter
- 9: Druckgaserzeuger
- 10: Ventilabdeckklappe
- 11: Ventilschutzklappe
- 12: Behalterschild
- 13: Löschleitung
- 14: Pralltopf oder 2-Becherdüse
- 15: Optischer Flammenmelder
- 16: Thermomaximalmelder
- 17: Anlagenschild
- 18: CO₂-Warnschil
- 19: Hinweisschild "UV oder IR-Strahlung"
- 20: Detektor für von Flammen ausgestrahlte elektromagneti- sche Strahlung
- 21: Detektorgehäuse
- 22: Gehäuseboden
- 23: Fenster
- 24: Erste Leiterplatte
- 25: Zweite Leiterplatte
- 26: Empfängereinrichtung für die von Flammen ausgesandte elektromagnetische Strahlung
- 27: Abstandssensor
- 28: Auswerteelektronik
- 29: Lichtemitterdiode
- 30: Photodiode
- 31: Störendes Objekt
- 32: Kammer des Abstandssensors
- 33: Kammer des Abstandssensors
- 34: Sensorgehäuse
- 35: Trennwand
- 36: Erste Öffnung
- 37: Zweite Öffnung

## Patentansprüche

1. Detektor für die Entdeckung von Flammen oder Funken in Werkzeugmaschinen, mit mindestens einer optischen Empfängereinrichtung (26) für die von Flammen ausgesandte elektromagnetische Strahlung, welche in einem Detektorgehäuse (21) mit mindestens einem Fenster (23) angeordnet ist, wobei zur Sichtfeldüberwachung des Detektors (20) ein Abstandssensor (27) im oder am Detektorgehäuse (21) angeordnet ist,
**dadurch gekennzeichnet, dass** der Abstandssensor (27) aus einem impulsförmige Lichtsignale aussendenden Sender (29) und einem Empfänger (30) besteht, welcher die von einem Objekt (31) im Sichtfeld des Detektors (20)reflektierten impulsförmigen Lichtsignale empfängt, wobei der Sender (29) und der Empfänger (30) mit einer Auswerteeinheit (28) verbunden sind, welche zur Entfernungsbestimmung des Objektes (31) eine Laufzeitmessung durchführt, und dass die Auswerteeinheit (28) eine Störmeldung ausgibt, wenn der Abstand zu dem im Sichtfeld detektierten Objekt (31) einen vorgegebenen Wert unterschreitet.

2. Detektor nach Anspruch 1,
**dadurch gekennzeichnet, dass** der Sender eine Diode (29) ist, welche elektromagnetische Strahlung in einem definierten Frequenzbereich emittiert, der zu dem von der elektomagnetischen Strahlung der Flammen ausgestrahlten Frequenzbereich unterschiedlich ist.

3. Detektor nach Anspruch 2,
**dadurch gekennzeichnet, dass** die Diode (29) eine Halbleiterdiode ist.

4. Detektor nach Anspruch 2,
**dadurch gekennzeichnet, dass** die Diode (29) eine Laserdiode ist.

5. Detektor nach den Ansprüchen 1 und 2,
**dadurch gekennzeichnet, dass** der Sender (29) und der Empfänger (30) in einem, für den von dem Sender(29)emittierten Frequenzbereich der elektromagnetischen Strahlung undurchlässigen Sensorgehäuse (34) angeordnet sind.

6. Detektor nach den Ansprüchen 1 und 5,
**dadurch gekennzeichnet, dass** das Sensorgehäuse (34) innerhalb des Detektorgehäuses (21) angeordnet ist.

7. Detektor nach einem der Ansprüche 2 oder 5,
**dadurch gekennzeichnet, dass** der von dem Sender (29)ausgestrahlte definierte Frequenzbereich der elektromagnetische Strahlung im Infrarotbereich liegt.

8. Detektor nach Anspruch 1,
**dadurch gekennzeichnet, dass** der Sender (29), der Empfänger (30) und die Auswerteeinheit (28) auf einer einzigen Leiterplatte (25) angeordnet sind.

9. Detektor nach Anspruch 5 und 8,
**dadurch gekennzeichnet, dass** der Sender (29) und der Empfänger (30) mit dem Sensorgehäuse (34) auf der Leiterplatte (25) angeordnet sind.

10. Detektor nach einem der Ansprüche 1 bis 5,
**dadurch gekennzeichnet, dass** mehrere neben- und / oder untereinander angeordnete Sender (29) vorhanden sind, welche jeweils einen definierten Abstrahlwinkel aufweisen.

11. Detektor nach Anspruch 1,
**dadurch gekennzeichnet, dass** mehrere Fenster (23a, 23b) vorhanden sind, wobei jedem Fenster (23a, 23b) ein Abstandssensor (27a, 27b) zugeordnet ist.

## Claims

1. Detector for detecting flames or sparks in machine tools, comprising at least one optical receiver device (26) for the electromagnetic radiation emitted by flames, which is arranged in a detector housing (21) having at least one window (23), wherein, in order to monitor the field of vision of the detector (20), a distance sensor (27) is arranged in or on the detector housing (21), **characterised in that** the distance sensor (27) consists of a transmitter (29) which emits light signals in the form of pulses, and a receiver (30) which receives the light signals in the form of pulses which are reflected by an object (31) in the field of vision of the detector (20), wherein the transmitter (29) and the receiver (30) are connected to an evaluation unit (28) which carries out a propagation time measurement in order to determine the distance of the object (31), and **in that** the evaluation unit (28) outputs an error message if the distance to the object (31) detected in the field of vision falls below a predefined value.

2. Detector according to claim 1, **characterised in that** the transmitter is a diode (29) which emits electromagnetic radiation in a defined frequency range which is different from the frequency range emitted by the electromagnetic radiation of the flames.

3. Detector according to claim 2, **characterised in that** the diode (29) is a semiconductor diode.

4. Detector according to claim 2, **characterised in that** the diode (29) is a laser diode.

5. Detector according to claims 1 and 2, **characterised in that** the transmitter (29) and the receiver (30) are arranged in a sensor housing (34) which is impermeable to the frequency range of the electromagnetic radiation emitted by the transmitter (29).

6. Detector according to claims 1 and 5, **characterised in that** the sensor housing (34) is arranged within the detector housing (21).

7. Detector according to one of claims 2 or 5, **characterised in that** the defined frequency range of the electromagnetic radiation emitted by the transmitter (29) lies in the infrared range.

8. Detector according to claim 1, **characterised in that** the transmitter (29), the receiver (30) and the evaluation unit (28) are arranged on a single printed circuit board (25).

9. Detector according to claim 5 and 8, **characterised in that** the transmitter (29) and the receiver (30) are arranged with the sensor housing (34) on the printed circuit board (25).

10. Detector according to one of claims 1 to 5, **characterised in that** a plurality of transmitters (29) arranged next to and/or below one another are provided, which in each case have a defined emission angle.

11. Detector according to claim 1, **characterised in that** a plurality of windows (23a, 23b) are provided, wherein a distance sensor (27a, 27b) is assigned to each window (23a, 23b).

## Revendications

1. Détecteur pour déceler des flammes ou des étincelles dans des machines-outils, comportant au moins une installation de réception optique (26) du rayonnement électromagnétique émis par des flammes, cette installation étant logée dans un boîtier de détecteur (21) ayant au moins une fenêtre (23),
et pour la surveillance du champ de vision du détecteur (20), un détecteur de distance (27) est prévu dans ou sur le boîtier de détecteur (21), détecteur **caractérisé en ce que**
le détecteur de distance (27) se compose d'un émetteur (29) émettant des signaux lumineux impulsionnels et d'un récepteur (30) recevant les signaux lumineux impulsionnels réfléchis par l'objet (31) dans le champ de vision du déflecteur (20),
l'émetteur (29) et le récepteur (30) étant reliés à une unité d'exploitation (28) qui, pour déterminer la distance de l'objet (31) effectue une mesure de temps de parcours, et
l'unité d'exploitation (28) émet un message de perturbation si la distance par rapport à l'objet (31) détecté dans le champ de vision passe en dessous d'une valeur prédéfinie.

2. Détecteur selon la revendication 1,
**caractérisé en ce que**
l'émetteur est une diode (29) émettant un rayonnement électromagnétique dans une plage des fréquences définie, et qui est différent du rayonnement électromagnétique de la plage des fréquences d'émission des flammes.

3. Détecteur selon la revendication 1,
**caractérisé en ce que**
la diode (29) est une diode semi-conductrice.

4. Détecteur selon la revendication 2,
**caractérisé en ce que**
la diode (29) est une diode laser.

5. Détecteur selon les revendications 1 et 2,
**caractérisé en ce que**
l'émetteur (29) et le récepteur (30) sont logés dans un boîtier d'émetteur (34) non transparent au rayonnement électromagnétique de la plage des fréquences émises par l'émetteur (29).

6. Détecteur selon les revendications 1 et 5,
**caractérisé en ce que**
le boîtier de capteur (34) est logé dans le boîtier de détecteur (21).

7. Détecteur selon la revendication 2 ou 5,
**caractérisé en ce que**
la plage des fréquences définie, émises par l'émetteur (29) du rayonnement électromagnétique se situe dans le domaine infrarouge.

8. Détecteur selon la revendication 1,
**caractérisé en ce que**
l'émetteur (29), le récepteur (30) et l'unité d'exploitation (28) sont installés sur une plaque de circuit (25).

9. Détecteur selon les revendications 5 et 8,
**caractérisé en ce que**
l'émetteur (29) et le récepteur (30) sont prévus dans le boîtier de capteur (34) sur une plaque de circuit (25).

10. Détecteur selon les revendications 1 à 5,
**caractérisé en ce que**
plusieurs émetteurs (29) en parallèle et/ou subordonnés sont prévus avec chacun un angle d'émission défini.

11. Détecteur selon la revendication 1,
**caractérisé par**
plusieurs fenêtres (23a, 23b) et à chaque fenêtre (23a, 23b) est associé un capteur de distance (27a, 27b).
